Europäisches Patentamt

European Patent Office

Office européen des brevets

(11) Veröffentlichungsnummer: **0 209 909**
**B1**

(12) **EUROPÄISCHE PATENTSCHRIFT**

(45) Veröffentlichungstag der Patentschrift:
10.01.90

(51) Int. Cl.⁴: **F16F 9/49**, F16F 9/02, E05F 3/00

(21) Anmeldenummer: 86110260.6

(22) Anmeldetag: 25.07.86

(54) Gasfeder mit hydraulischer Enddämpfung.

(30) Priorität: 26.07.85 DE 3526739

(43) Veröffentlichungstag der Anmeldung:
28.01.87 Patentblatt 87/5

(45) Bekanntmachung des Hinweises auf die Patenterteilung:
10.01.90 Patentblatt 90/2

(84) Benannte Vertragsstaaten:
DE FR GB SE

(56) Entgegenhaltungen:
EP-A- 0 059 150
DE-A- 2 202 378
FR-A- 1 056 243
GB-A- 996 180
GB-A- 1 072 495

(73) Patentinhaber: AUDI AG,
Auto-Union-Strasse 1 Postfach 220,
D-8070 Ingolstadt(DE)

(72) Erfinder: Kammerer, Ulrich, Dipl.-Wirtsch.-Ing.,,
Sonnengasse 7, D-7107 Neckarsulm(DE)

(74) Vertreter: Speidel, Eberhardt,
Postfach 1320 Waldpromenade 26, D-8035 Gauting(DE)

## Beschreibung

Die Erfindung bezieht sich auf eine Gasfeder mit hydraulischer Enddämpfung entsprechend dem Oberbegriff des Anspruchs 1, die insbesondere zur Erleichterung des Öffnens eines schwenkbaren Bauteils eines Kraftfahrzeuges, beispielsweise einer Heckklappe oder einer Hecktür, bestimmt ist.

Bei einer derartigen Anwendung ist normalerweise das äußere Ende der Kolbenstange an der Karosserie und das geschlossene Ende des Zylinders an dem verschwenkbaren Bauteil angelenkt. In der Schließstellung des Bauteils hat die Gasfeder ihre kleinste Länge und der Anlenkpunkt der Kolbenstange an der Karosserie liegt höher als der Anlenkpunkt des Zylinders an dem beweglichen Bauteil. Beim Verschwenken des Bauteils in seine Öffnungsstellung schwenkt die Gasfeder um die Anlenkstelle der Kolbenstange an der Karosserie und sie kommt in eine Lage, in der das geschlossene Ende des Zylinders über dem Anlenkpunkt der Kolbenstange liegt.

Es sind Gasfedern mit hydraulischer Enddämpfung bekannt (DE-OS 29 33 590), bei denen auf der Kolbenstange ein axial verschiebbarer Verdrängerzylinder angeordnet ist, der gegen Ende der Auswärtsbewegung der Kolbenstange in einen im Zylinder der Gasfeder angeordneten Verdrängerzylinder eintaucht und das darin angesammelte Öl durch den Ringspalt zwischen Verdrängerkolben und Verdrängerzylinder verdrängt, wodurch die gewünschte hydraulische Enddämpfung erreicht wird. Diese Dämpfung wird jedoch bei Gasfedern, die durch die Waagrechte verschwenkt werden, wie dies bei Gasfedern zum Gewichtsausgleich von um eine waagrechte Achse verschwenkbaren Bauteilen von Kraftfahrzeugen der Fall ist, nicht wirksam, da das Gas, das beim Öffnungsvorgang vom kolbenstangenseitigen Teil des Zylinderinnenraumes durch die Drosselkanäle zu dem dem geschlossenen Ende des Zylinders benachbarten Teil des Zylinderinnenraumes strömt, das Überströmen der Flüssigkeit durch die Drosselkanäle zu dem kolbenstangenseitigen Teil des Zylinderinnenraumes verhindert.

Der Erfindung liegt die Aufgabe zugrunde, eine insbesondere zum Gewichtsausgleich von um eine waagrechte Achse verschwenkbaren Bauteilen von Kraftfahrzeugen bestimmte Gasfeder zu schaffen, mit der eine wirksame Anschlagdämpfung des Kolbens im ausgefahrenen Zustand der Gasfeder erreicht wird.

Diese Aufgabe wird erfindungsgemäß dadurch gelöst, daß als Endanschlag ein im Zylinderinnenraum angeordneter offenporiger Schaumstoffkörper angeordnet ist, dessen Porenvolumen größer ist als das Volumen des Drosselkanals im Kolben.

Der offenporige Schaumstoffkörper wirkt als Flüssigkeitsspeicher, der mit Flüssigkeit gefüllt ist und am Ende der Auswärtsbewegung der Kolbenstange von dem Kolben zusammengedrückt wird, wobei die in diesem enthaltene Flüssigkeit durch den Drosselkanal im Kolben allmählich entweichen kann. Diese Anschlagdämpfung kann jedoch erst dann eintreten, wenn das in dem Drosselkanal enthaltene Gas verdrängt ist, weswegen es nötig ist, daß das in dem Schaumstoffkörper gespeicherte Flüssigkeitsvolumen größer ist als das Volumen des Drosselkanals.

Vorzugsweise hat der Schaumstoffkörper die Form eines die Kolbenstange umgebenden Ringes mit einem dem Durchmessers des Zylinderinnenraumes entsprechenden Außendurchmesser. Der Schaumstoffkörper wird im Zylinderinnenraum so befestigt, daß er sich nicht verschieben kann. Er wird beispielsweise an die am offenen Ende des Zylinders angebrachte Kolbenstangenführung angeklebt.

Für den Schaumstoffkörper muß naturgemäß ein Material verwendet werden, das gegen die Flüssigkeit resistent ist.

Ein Ausführungsbeispiel der Erfindung wird im folgenden unter Bezugnahme auf die Zeichnungen beschrieben. Es zeigt:

Fig. 1 eine Gasfeder als Gewichtsausgleich für die Heckklappe eines Kraftfahrzeuges in drei verschiedenen Stellungen, und

Fig. 2 einen Längsschnitt des kolbenstangenseitigen Endes des Gasfederzylinders in größerem Maßstab.

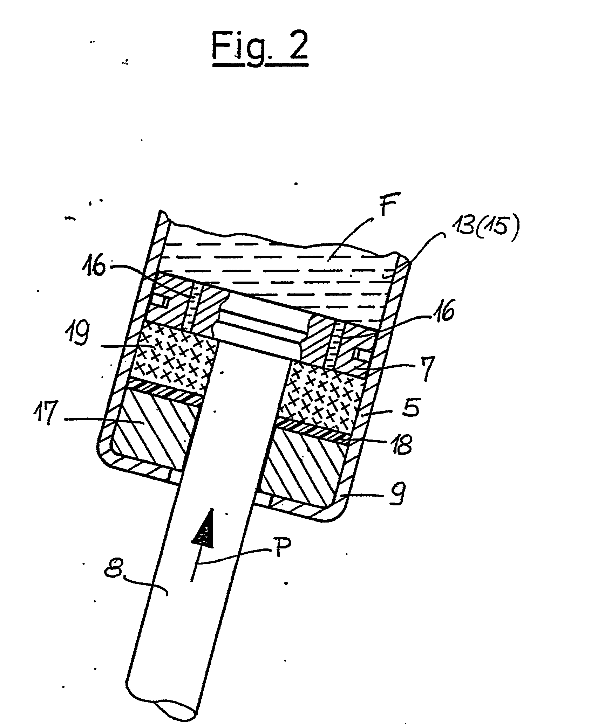

Die allgemein mit 1 bezeichnete Gasfeder ist im Ausführungsbeispiel zur Erleichterung des Öffnens einer Heckklappe 2 eines Kraftfahrzeuges bestimmt, die um eine waagrechte Achse 3 schwenkbar an der Fahrzeugkarosserie 4 befestigt ist. Die Gasfeder besteht aus einem Zylinder 5, der an seinem einen Ende 6 geschlossen ist, und einem Kolben 7, von dem eine Kolbenstange 8 ausgeht, die sich durch das offene Ende 9 des Zylinders 5 erstreckt. Das geschlossene Ende 6 des Zylinders 5 ist durch einen Drehzapfen 10 mit der Heckklappe 2 und das äußere Ende 11 der Kolbenstange 8 ist durch einen Drehzapfen 12 mit der Karosserie 4 verbunden. Der Zylinderinnenraum 13 enthält eine unter Druck stehende Gasfüllung und eine geringe Flüssigkeitsmenge. Durch den Kolben 7 wird der Innenraum 13 in zwei Teilräume 14 und 15 unterteilt, die über Drosselkanäle 16 (Fig. 2) im Kolben 7 miteinander in Verbindung stehen. In das offene Ende 9 des Zylinders 5 ist ein Lagerelement 17 zur Führung der Kolbenstange 8 eingesetzt. Eine Dichtung 18 dichtet den Zylinderraum 13 nach außen hin ab.

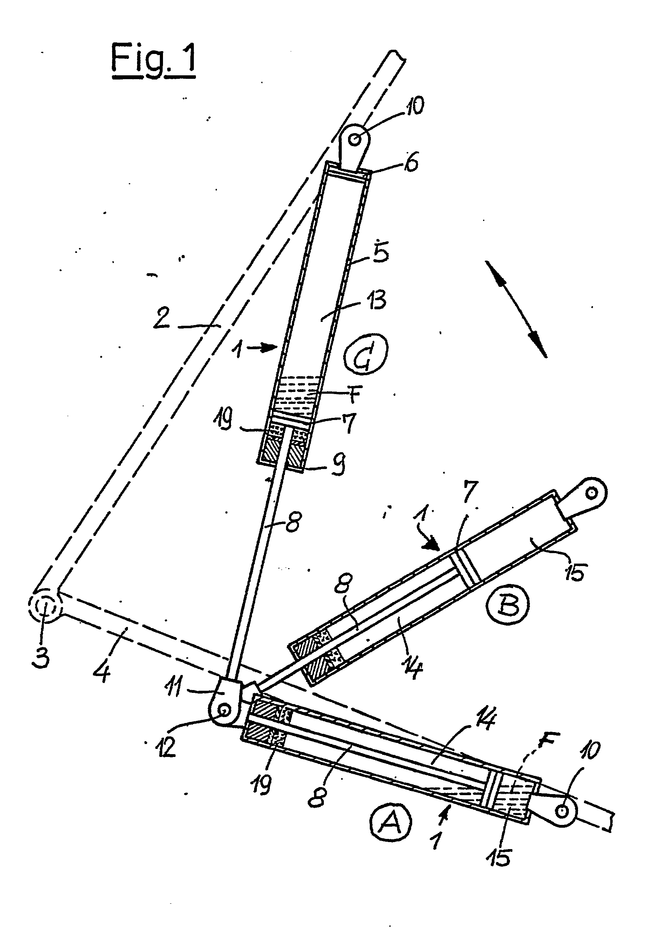

In Fig. 1 ist die Gasfeder 1 bei A im zusammengeschobenen Zustand dargestellt, welcher der geschlossenen Stellung der Heckklappe 2 entspricht. Die gestrichelt gezeichnete Flüssigkeitsmenge F nimmt die dargestellte Lage ein. Beim Öffnen der Heckklappe 2 fährt die Kolbenstange 8 aus, bis sie in der Stellung C der Gasfeder ihre Endlage erreicht hat. Bei B ist eine Zwischenlage der Gasfeder dargestellt. Die Öffnungsbewegung der Heckklappe 2 wird von der Gasfeder dadurch unterstützt, daß das Druckgas in dem Teilraum 15 über eine größere Fläche auf den Kolben 7 wirkt als das Druckgas in dem Teilraum 14, da die druckbeaufschlagte untere Kolbenseite um den Querschnitt der Kolbenstange 8 vermindert ist. Bei diesem Öffnungsvorgang strömt das Gas aus dem Teilraum 14 durch die Drosselkanäle 16 in den Teilraum 15. Dadurch bildet sich in dem Teilraum 15 ein Aerosol aus Gas und Flüssigkeit, während der Teilraum 14 weitgehend flüssigkeitsfrei ist.

Um eine hydraulische Enddämpfung des Kolbens 7 in der ausgefahrenen Stellung der Gasfeder, also in der Stellung C, zu erreichen, ist im Zylinderinnenraum 13 am kolbenstangenseitigen Ende ein offenporiger Schaumstoffkörper 19 angeordnet, der die Kolbenstange 8 umgibt und dessen Außendurchmesser dem Durchmesser des Zylinderinnenraums 13 entspricht. Der Schaumstoffkörper 19 ist unverschiebbar im Zylinderinnenraum 13 angeordnet, was beispielsweise durch Verkleben mit dem Zylinder 5 oder mit der Dichtung 18 erreicht werden kann. Das Porenvolumen des Schaumstoffkörpers 19 ist größer als das Volumen der Drosselkanäle 16.

Die Wirkungsweise des Schaumstoffkörpers 19 ist folgende:
In der Lage C der Gasfeder, die der in Fig. 2 dargestellten Lage entspricht, steht die Flüssigkeit F über dem Kolben 7 und auch in den Drosselkanälen 16. Der Schaumstoffkörper 19 ist zusammengedrückt. Wird nun die Heckklappe 2 geschlossen, so wird der Kolben 7 in Richtung des Pfeiles P in Fig. 2 verschoben, wodurch sich der Schaumstoffkörper 19 entspannt und mit Flüssigkeit vollsaugt. Diese Füllung bleibt aufgrund der Kapillarwirkung auch dann bestehen, wenn die Gasfeder in die Stellung A von Fig. 1 verschwenkt ist. Beim nächsten Öffnungsvorgang wird der Schaumstoffkörper 19 am Ende der Ausfahrbewegung der Kolbenstange 8 von dem Kolben 7 zusammengedrückt, wobei die in ihm enthaltene Flüssigkeit durch die Drosselkanäle 16 abströmt. Diese gedrosselte Strömung hat eine wirksame Dämpfung des Endanschlags des Kolbens 7 zur Folge. Da, wie vorher erwähnt, in dem Teilraum 15 aufgrund der Strömung des Gases durch die Drosselkanäle 16 ein Aerosol gebildet wird, also kein zusammenhängendes Flüssigkeitsvolumen vorliegt, befindet sich auch in den Drosselkanälen 16 am Ende der Ausfahrbewegung der Kolbenstange 7 zunächst Gas. Dieses Gas muß erst von der im Schaumstoffkörper 19 gespeicherten Flüssigkeit verdrängt werden, bevor eine wirksame Dämpfung eintritt. Dies wird dadurch erreicht, daß das Porenvolumen des Schaumstoffkörpers 19 erheblich größer ist als das Volumen der Drosselkanäle 16, sodaß nach dem Verdrängen des Gases aus den Drosselkanälen 16 noch genug Flüssigkeit in dem Schaumstoffkörper 19 verbleibt, die dann bei der Weiterbewegung des Kolbens bis in seine Endstellung durch die engen Drosselkanäle 16 strömen muß und die gewünschte Dämpfung bewirkt.

Wird die Klappe 2 wieder geschlossen, so wiederholt sich der beschriebene Vorgang, d.h. der Schaumstoffkörper 19 entspannt sich und saugt sich dadurch mit Flüssigkeit voll, sodaß beim nächsten Öffnungsvorgang wieder das Flüssigkeitsvolumen im Schaumstoffkörper 19 als Dämpfungsflüssigkeit für den Endanschlag des Kolbens zur Verfügung steht.

**Patentansprüche**

1. Gasfeder mit hydraulischer Enddämpfung, bestehend aus einem an einem Ende geschlossenen Zylinder, dessen Innenraum eine unter Druck stehende Gasfüllung und eine geringe Flüssigkeitsmenge enthält und durch einen Kolben, von dem eine das andere Ende des Zylinders durchdringende Kolbenstange ausgeht, in zwei Teilräume unterteilt ist, die über mindestens einen Drosselkanal im Kolben miteinander in Verbindung stehen, gekennzeichnet durch einen Endanschlag für den Kolben (7) in Form eines im Zylinderinnenraum (13) angeordneten offenporigen Schaumstoffkörpers (19), dessen Porenvolumen größer ist als das Volumen des Drosselkanals (16) im Kolben (7).

2. Gasfeder nach Anspruch 1, dadurch gekennzeichnet, daß der Schaumstoffkörper (19) am kolbenstangenseitigen Ende des Zylinderinnenraumes (13) angeordnet ist und die Form eines die Kolbenstange (8) umgebenden Ringes mit einem dem Durchmesser des Zylinderinnenraumes (13) entsprechenden Außendurchmesser hat.

3. Gasfeder nach Anspruch 1 oder 2, dadurch gekennzeichnet, daß der Schaumstoffkörper (19) unverschiebbar am Zylinder (5) der Gasfeder oder an einem mit diesem fest verbundenen Bauteil (Kolbenstangenführung 17) angebracht ist.

**Claims**

1. Gas spring with hydraulic damping at the end of the stroke, comprising a cylinder closed at one end, the interior of the cylinder containing a filling of gas under pressure and a small amount of liquid and being devided into two partial chambers by a piston from which a piston rod extends which passes through the other end of the cylinder, said partial chambers being interconnected by at least one throttle passage within the piston, characterized by an end abutment for the piston (7) in form of a foam body (19) with open pores arranged within the interior (13) of the cylinder and having a pore volume greater than the volume of the throttle passage (16) within the piston (7).

2. Gas spring according to claim 1, characterized in that the foam body (19) is arranged on the end of the cylinder interior (12) through which the piston rod (8) extends and has the shape of a ring surrounding the piston rod and having an outer diameter corresponding to the diameter of the cylinder interior (13).

3. Gas spring according to claim 1 or 2, characterized in that the foam body (19) is fixed to the cylinder (5) of the gas spring or to a member (piston rod guide 17) rigidly connected to the cylinder.

**Revendications**

1. Ressort pneumatique à amortissement hydraulique de fin de course constitué d'un cylindre fermé à une extrémité dont l'espace intérieur contient une dose de gaz sous pression et une faible quantité de liquide, et qui est divisé en deux espaces partiels par un piston, d'où part une tige de piston pénétrant dans l'autre extrémité du cylindre, les espaces partiels étant reliés l'un à l'autre par au moins un canal d'étranglement dans le piston, caractérisé par une butée finale pour le piston (7) en forme d'un corps spongieux (19) à pores ouvertes disposé dans l'espace intérieur (13) du cylindre, dont le volume des pores est supérieur au volume du canal d'étranglement (16) dans le piston (7).

2. Ressort pneumatique selon la revendication 1, caractérisé en ce que le corps spongieux (19) est disposé sur l'extrémité de l'espace intérieur (13) de cylindre sur l'extrémité située du côté de la tige du piston et qui présente la forme d'un anneau entourant la tige (8) de piston d'un diamètre correspondant au diamètre de l'espace intérieur (13) de cylindre.

3. Ressort pneumatique selon la revendication 1 ou 2, caractérisé en ce que le corps spongieux (19) est amené sans possibilité de coulissement sur le cylindre (5) du ressort pneumatique ou sur un composant (guidage 17 de tige de piston) qui est relié de façon fixe à ce dernier.

# Fig. 1

# Fig. 2